# EUROPÄISCHE PATENTSCHRIFT

(11) **EP 4 515 514 B1**
(45) Veröffentlichungstag und Bekanntmachung des Hinweises auf die Patenterteilung: **10.06.2026**
(21) Anmeldenummer: 23720129.8
(22) Anmeldetag: 19.04.2023
(51) Int. Cl.: G08B 13/08, G08B 13/16

(54) **VERFAHREN ZUM ERMITTELN EINER BETÄTIGUNG EINER TÜR ODER EINES FENSTERS IN EINEM ODER MEHREREN RÄUMEN**
METHOD FOR ASCERTAINING THE ACTUATION OF A DOOR OR A WINDOW IN ONE OR MORE ROOMS
PROCÉDÉ POUR DÉTERMINER L'ACTIONNEMENT D'UNE PORTE OU D'UNE FENÊTRE DANS UNE OU PLUSIEURS PIÈCES

(30) Priorität: 25.04.2022 DE 102022203982
(43) Veröffentlichungstag der Anmeldung: 05.03.2025
(73) Patentinhaber: Robert Bosch GmbH, 70442 Stuttgart (DE)
(72) Erfinder: BLOCK, Thomas, 72770 Reutlingen (DE); GANDHI, Kaustubh, 70794 Filderstadt (DE); SOLTANI, Sara, 21649 Limhamn (SE); PAUL, Shubhabrata, 24564 Hjärup (SE)
(86) Internationale Anmeldenummer: PCT/EP2023/060144
(87) Internationale Veröffentlichungsnummer: WO 2023/208686

(56) Entgegenhaltungen:
- FR-A1- 2 569 027
- US-A1- 2014 266 669
- WU MUCHEN MUWU@UCDAVIS EDU ET AL: "Monitoring building door events using barometer sensor in smartphones", PROCEEDINGS OF THE 1ST WORKSHOP ON DIGITAL TWIN & EDGE AI FOR INDUSTRIAL IOT, ACMPUB27, NEW YORK, NY, USA, 7 September 2015 (2015-09-07), pages 319 - 323, XP058977887, ISBN: 978-1-4503-9970-8, DOI: 10.1145/2750858.2804257

## Beschreibung

Die Erfindung betrifft ein Verfahren zum Ermitteln einer Betätigung einer Tür oder eines Fensters in einem oder mehreren Räumen mittels eines in einem der Räume angeordneten Drucksensors.

Die Erfindung betrifft weiter eine Ermittlungsvorrichtung, die ausgebildet ist, eine Betätigung einer Tür oder eines Fensters in einem oder mehreren Räumen mittels eines in einem der Räume angeordneten Drucksensors zu ermitteln.

### Stand der Technik

Es ist bekannt, dass ein Öffnen oder Schließen von Fenstern und Türen in einem Raum plötzliche Druckänderungen auslösen kann. Diese Druckänderungen können mithilfe von Drucksensoren gemessen werden.

Aufgrund von natürlichen Druckschwankungen, Störeffekten und Signaldrift ist jedoch das Ermitteln einer Betätigung eines Fensters oder einer Tür ausgehend von einem Drucksensorsignal schwierig, insbesondere wenn lediglich ein Drucksensor eine Betätigung von mehreren Fenstern und/oder Türen überwachen soll.

Beispiele für Stand der Technik sind: FR 2 569 027 A1, US 2014/266669 A1 und das Dokument WU MUCHEN MUWU@UCDAVIS EDU ET AL: "Monitoring building door events using barometer sensor in smartphones",PROCEEDINGS OF THE 1ST WORKSHOP ON DIGITAL TWIN & EDGE Al FOR INDUSTRIAL IOT, ACMPUB27, NEW YORK, NY, USA, 7. September 2015 (2015-09-07), Seiten 319-323, XP058977887,DOI: 10.1145/2750858.2804257ISBN: 978-1-4503-9970-8.

### Offenbarung der Erfindung

In einer Ausführungsform stellt die vorliegende Erfindung ein Verfahren zum Ermitteln einer Betätigung einer Tür oder eines Fensters in einem oder mehreren Räumen mittels eines in einem der Räume angeordneten Drucksensors bereit, umfassend die Schritte:
- Detektieren von Druckwerten anhand des Drucksensors zu mehreren Zeitpunkten;
- Bestimmen der Summe der absoluten Änderungsraten erster Ordnung und Bestimmen der Summe der absoluten Änderungsraten zweiter Ordnung der zeitlich letzten Druckwerte zu den mehreren Zeitpunkten;
- Bestimmen der globalen maximalen und minimalen Werte der Summen der Änderungsraten innerhalb eines Zeitfensters;
- Identifizieren eines lokalen Extremums der Summen der absoluten Änderungsraten erster Ordnung und/oder der Summen der absoluten Änderungsraten zweiter Ordnung basierend auf den globalen maximalen und minimalen Werten der Summen innerhalb des Zeitfensters;
- Ermitteln einer Betätigung der Tür und/oder des Fensters anhand eines Vergleichs des ermittelten lokalen Extremums mit einem Schwellwert.

In einer Ausführungsform stellt die vorliegende Erfindung eine Ermittlungsvorrichtung bereit, die ausgebildet ist, eine Betätigung einer Tür oder eines Fensters in einem oder mehreren Räumen mittels eines in einem der Räume angeordneten Drucksensors zu ermitteln, umfassend:
- eine Detektionseinrichtung, ausgebildet zum Detektieren von Druckwerten anhand des Drucksensors zu mehreren Zeitpunkten;
- eine erste Bestimmungseinrichtung, ausgebildet zum Bestimmen der Summe der absoluten Änderungsraten erster Ordnung und/oder Bestimmen der Summe der absoluten Änderungsraten zweiter Ordnung der zeitlich letzten Druckwerte zu den mehreren Zeitpunkten;
- eine zweite Bestimmungseinrichtung, ausgebildet zum Bestimmen der globalen maximalen und minimalen Werte der Summen der Änderungsraten innerhalb eines Zeitfensters;
- eine Identifizierungseinrichtung, ausgebildet zum Identifizieren eines lokalen Extremums der Summen der absoluten Änderungsraten erster Ordnung und/ oder der Summen der absoluten Änderungsraten zweiter Ordnung basierend auf den globalen maximalen und minimalen Werten der Summen innerhalb des Zeitfensters;
- eine Ermittlungseinrichtung, ausgebildet zum Ermitteln eines Betätigungsereignisses der Tür und/oder des Fensters anhand eines Vergleichs des ermittelten lokalen Extremums mit einem Schwellwert.

Unter einer Tür sind insbesondere Türen zwischen zwei Innenräumen eines Gebäudes, zwischen einem Innenraum und einem Flur des Gebäudes und/oder zwischen einem Innenraum und einer Umgebung außerhalb des Gebäudes zu verstehen.

Mit dem Verfahren können insbesondere mehrere Fenster und/oder Türen überwacht werden, insbesondere dahingehend, ob zumindest eines der Fenster und/oder der Türen betätigt wird.

Einer der damit erzielten Vorteile ist, dass auf zuverlässige Weise eine Betätigung eines Fensters oder einer Tür in einem oder mehreren Räumen ermittelt werden kann. Ein weiterer Vorteil ist, dass mit lediglich einem Drucksensor eine Betätigung mehrerer Fenster und/oder Türen ermittelt werden kann. Darüber hinaus kann der Drucksensor von dem Fenster oder der Tür beabstandet sein, insbesondere nicht in direkter Nähe zu dem Fenster oder der Tür angeordnet sein. Weiterhin kann der Einfluss von Sensordrift und Hintergrundrauschen auf die Signalqualität des Drucksensors reduziert werden. Außerdem kann das Betätigen eines Fensters oder einer Tür mit geringem Energieaufwand ermittelt werden.

Der Begriff "Ermitteln einer Betätigung der Tür und/oder des Fensters" ist definiert als die Detektion eines Betätigungsereignisses der Tür und/oder des Fensters, insbesondere dass die Tür und/oder das Fenster von einem geschlossenen in einen offenen Zustand überführt wird oder umgekehrt. Darüber hinaus wird unter Ermitteln auch die Klassifikation des Betätigungsereignisses verstanden, insbesondere ob das Fenster und/oder die Tür geöffnet oder geschlossen wird.

Die Änderungsrate erster Ordnung ist definiert als die mathematische Änderungsrate einer Funktion durch eine Reihe von Werten, insbesondere eine Ableitung der Funktion durch die Reihe von Werten. Die Änderungsrate zweiter Ordnung ist definiert als die mathematische Änderungsrate der Änderungsrate einer Funktion durch die Reihe von Werten, insbesondere eine zweiten Ableitung der Funktion durch die Reihe von Werten.

Ein Zeitfenster ist definiert als eine Zeitspanne, die eine Anzahl von Zeitpunkten umfasst, insbesondere umfasst das Zeitfenster eine Anzahl der letzten Zeitpunkte, an denen ein Druckwert gemessen wird. Beispielsweise kann das Zeitfenster 2-5 Sekunden betragen.

Weitere Merkmale, Vorteile und weitere Ausführungsformen der Erfindung sind im Folgenden beschrieben oder werden dadurch offenbar.

Gemäß einer vorteilhaften Weiterbildung der Erfindung werden die detektierten Druckwerte durch einen kantenerhaltenden Filter, insbesondere einen bilateralen Filter, gefiltert. Alternativ oder zusätzlich kann ein Gesamtvariationsfilter verwendet werden. Durch einen kantenerhaltenden Filter kann Hintergrundrauschen aus den Drucksignalwerten herausgefiltert werden. Vorteil hiervon ist, dass ein Betätigen eines Fensters oder einer Tür zuverlässig aus den Drucksignalwerten ermittelt werden kann. Durch die Verwendung eines kantenerhaltenden Filters können insbesondere Änderungen in den Drucksignalwerten einfach und zuverlässig erkannt werden.

Gemäß einer vorteilhaften Weiterbildung der Erfindung wird das Detektieren einer Betätigung für einen Zeitraum von 5 Sekunden, vorzugsweise 3 Sekunden, ausgesetzt, wenn eine Betätigung ermittelt wird. Nach dem Ermitteln einer Betätigung können die Drucksignalwerte eine hohe Varianz aufweisen, sodass mehrere falsche Betätigungen ermittelt werden könnten, obwohl nur eine Betätigung eines Fensters oder einer Tür stattgefunden hat. Indem das Verfahren für einen Zeitraum ausgesetzt wird können diese fehlerhaften Ermittlungen auf einfache Weise reduziert werden.

Gemäß einer vorteilhaften Weiterbildung der Erfindung basiert das Ermitteln einer Betätigung auf zusätzlichen statistischen Kennzahlen, insbesondere einer Standardabweichung der detektierten Druckwerte, auf einer Anzahl an Mittelwertüberschreitungen und/oder auf einem Verhältnis eines maximalen und minimalen Druckwerts. Vorteil hiervon ist, dass das Betätigen eines Fensters oder einer Tür noch zuverlässiger ermittelt werden kann. Die genannten zusätzlichen statistischen Kennzahlen erlauben eine Verifizierung der ermittelten Betätigungen und/oder eine genauere Einordnung der ermittelten Betätigung. Die zusätzlichen statistischen Kennzahlen können analog zu der Summe der absoluten Änderungsraten in Bezug auf die maximalen und minimalen Werte innerhalb eines Zeitfensters analysiert werden. Insbesondere können der maximale und minimale Wert für die Schwellwertberechnung der statistischen Kennzahlen verwendet werden.

Gemäß einer vorteilhaften Weiterbildung der Erfindung wird zum Ermitteln einer Betätigung eine Topologie eines oder mehrerer Räume miteinbezogen. Die Topologie eines Raumes umfasst insbesondere den Grundriss, die Höhe, Lage, Neigung von Wänden innerhalb des Raumes, die Anordnung, also Lage und Ausrichtung, der Fenster und Türen und die Anordnung des Drucksensors im Raum. Darüber hinaus umfasst die Topologie insbesondere die Schließrichtung der Fenster und Türen - nach innen oder nach außen öffnend. Hierdurch kann eine Betätigung eines Fensters oder einer Tür einfacher ermittelt werden, insbesondere kann ermittelt werden, ob das Fenster oder die Tür geschlossen oder geöffnet wird.

Gemäß einer vorteilhaften Weiterbildung der Erfindung wird der Schwellwert anhand von historischen Daten und/oder Maschinenlernen festgelegt. Durch den Schwellwert wird unterschieden, ob ein lokales Extremum der Druckwerte eine Betätigung eines Fensters oder einer Tür bedeutet, oder lediglich durch Umgebungsrauschen verursacht wird. Durch einen zu hohen Schwellwert können einzelne Betätigungen nicht erkannt werden, insbesondere wenn das betätigte Fenster oder die betätigte Tür einen hohen Abstand zum Drucksensor aufweisen. Hingegen erhöht ein niedriger Schwellwert die Anzahl von falsch-positiven Ermittlungen von Betätigungen. Indem der Schwellwert anhand von historischen Daten und/oder Maschinenlernen festgelegt wird, kann die Wahrscheinlichkeit für falsch ermittelte oder nicht detektierte Betätigungen verringert werden. Insbesondere können zur Festlegung des Schwellwerts Datensätze verschiedener Szenarien zu Grunde gelegt werden, beispielsweise unterschiedliche Öffnungs- und Schließvorgänge, verschiedene Abstände zwischen einem Fenster und dem Drucksensor, zusätzliche Lüftung durch Ventilatoren, etc.. Sofern mehrere statistische Kennzahlen zur Ermittlung einer Betätigung eines Fensters oder einer Tür verwendet werden, kann für jeder der statistischen Kennzahlen ein Schwellwert festgelegt werden, insbesondere anhand von historischen Daten und/oder Maschinenlernen festgelegt werden.

Gemäß einer vorteilhaften Weiterbildung der Erfindung werden zwischen 1 und 100, insbesondere zwischen 10 und 50 und vorzugsweise zwischen 20 und 30 Druckwerte pro Sekunde gemessen. Hierdurch können Betätigungen von Fenstern oder Türen zuverlässig ermittelt und gleichzeitig kann der Energiebedarf für das Verfahren reduziert werden.

Gemäß einer vorteilhaften Weiterbildung der Erfindung umfasst das Ermitteln der Betätigung ein Bestimmen der Entfernung zwischen dem Drucksensor und dem Fenster oder der Tür, das Bestimmen einer Geschwindigkeit des Fensters oder der Tür und/oder das Bestimmen einer Schließrichtung des Fensters oder der Tür. Anhand der analysierten Drucksignale können, insbesondere unter Berücksichtigung der Topologie des Raumes, zusätzliche Informationen über die Betätigung des Fensters oder der Tür gewonnen werden. Insbesondere können durch einen Vergleich eines Drucksignals mit historischen beziehungsweise erlernten bekannten Drucksignalen Informationen wie beispielsweise die Entfernung zwischen dem Drucksensor und einem geöffneten Fenster ermittelt werden.

Weitere wichtige Merkmale und Vorteile der Erfindung ergeben sich aus den Unteransprüchen, aus den Zeichnungen und aus der dazugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert.

Dabei zeigt
- Figur 1: in schematischer Form Schritte eines Verfahrens gemäß einer Ausführungsform der vorliegenden Erfindung;
- Figur 2: in schematischer Form ein Diagramm eines Verlaufs von Druckwerten gemäß einer Ausführungsform der vorliegenden Erfindung;
- Figur 3: in schematischer Form ein Diagramm eines Verlaufs von gefilterten Druckwerten gemäß einer Ausführungsform der vorliegenden Erfindung;
- Figur 4: in schematischer Form ein Diagramm eines Verlaufs einer Summe von absoluten Änderungsraten von Druckwerten gemäß einer Ausführungsform der vorliegenden Erfindung;
- Figur 5: in schematischer Form ein Diagramm mit Schwellwertvergleichen gemäß einer Ausführungsform der vorliegenden Erfindung; und
- Figur 6: in schematischer Form einen Raum mit einer Ermittlungsvorrichtung gemäß einer Ausführungsform der vorliegenden Erfindung.

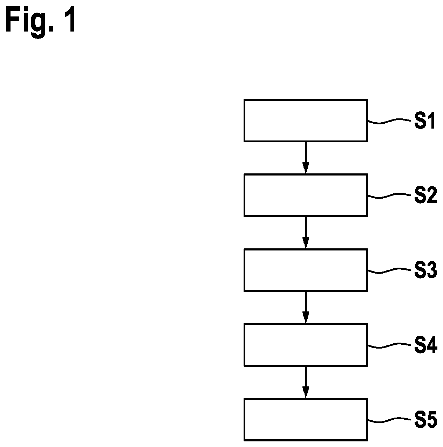

Figur 1 zeigt in schematischer Form Schritte eines Verfahrens gemäß einer Ausführungsform der vorliegenden Erfindung.

In Figur 1 sind Schritte eines Verfahrens zum Ermitteln einer Betätigung einer Tür oder eines Fensters in einem oder mehreren Räumen mittels eines in einem der Räume angeordneten Drucksensors gezeigt.

In einem Schritt S1 werden anhand des Drucksensors Druckwerte zu mehreren Zeitpunkten detektiert. Der Drucksensor kann beispielsweise eine Abtastrate von 25 Hertz aufweisen. Der Drucksensor erfasst den Druck zu mehreren Zeitpunkten, sodass aus dem Verlauf auf eine Betätigung des Fensters oder der Tür geschlossen werden kann. Die Druckwerte können mit einem kantenerhaltenden Filter geglättet werden, um Umgebungsrauschen zu entfernen.

In einem Schritt S2 werden die Summe der absoluten Änderungsraten erster Ordnung und die Summe der absoluten Änderungsraten zweiter Ordnung der zeitlich letzten Druckwerte zu den mehreren Zeitpunkten bestimmt. Hierfür wird zunächst aus dem Verlauf der Druckwerte zu den mehreren Zeitpunkten die Änderungsrate erster Ordnung, insbesondere ein Wert einer ersten Ableitung und die Änderungsrate zweiter Ordnung, insbesondere ein Wert einer zweiten Ableitung, bestimmt. Anschließend wird die Summe der zeitlich letzten betragsmäßigen Änderungsraten erster Ordnung bestimmt. Das heißt insbesondere, dass die betragsmäßigen Änderungsraten zu den letzten 50 - 300, vorzugsweise 100 - 200, gemessenen Druckwerten summiert werden. Analog wird die Summe der zeitlich letzten betragsmäßigen Änderungsraten zweiter Ordnung bestimmt. Somit ergibt sich ein Verlauf der Summe der betragsmäßigen Änderungsraten erster und zweiter Ordnung über die mehrere Zeitpunkte hinweg.

In einem Schritt S3 werden die globalen maximalen und minimalen Werte der Summen der Änderungsraten innerhalb eines Zeitfensters bestimmt. Durch das globale Maximum und Minimum werden die Grenzen der Änderungsraten innerhalb des Zeitfensters bestimmt. Hierdurch kann beispielsweise der Einfluss von Umgebungsdruckschwankungen oder Sensordrift verringert werden, da eine gegebenenfalls vorhandene "Grundänderung" des Drucks bei der Ermittlung von Betätigungen der Tür oder des Fensters miteinbezogen werden kann. Insbesondere kann die Höhe eines detektierten Extremums mit der "Grundänderung" des Drucks verglichen werden, um relevante mögliche Betätigungen des Fensters oder der Tür ermitteln zu können. In analoger Weise können auch die globalen maximalen und minimalen Werte von anderen statistischen Kennzahlen beispielsweise der Standardabweichung oder dem Spitze-zu-Tal-Verhältnis miteinbezogen werden.

In einem Schritt S4 wird ein lokales Extremum der Summen der absoluten Änderungsraten erster Ordnung und/oder der Summen der absoluten Änderungsraten zweiter Ordnung basierend auf den globalen maximalen und minimalen Werten der Summen innerhalb des Zeitfensters identifiziert. Insbesondere anhand von lokalen Maxima der Änderungsraten erster Ordnung können mögliche Betätigungen des Fensters oder der Tür ermittelt werden. Lokale Extrema, die einen geringen Abstand von dem minimalen Wert der Summe und einen großen Abstand zu dem maximalen Wert der Summe - also im Vergleich zu den Werten in einem Zeitfenster niedrig sind - können nicht berücksichtigt werden, da sie voraussichtlich nicht durch eine Betätigung des Fensters oder der Tür hervorgerufen sind.

In einem Schritt S5 wird eine Betätigung der Tür und/oder des Fensters anhand eines Vergleichs des ermittelten lokalen Extremums mit einem Schwellwert ermittelt. Die ermittelten lokalen Extrema deuten auf eine mögliche Betätigung hin, könnten jedoch auch ein falsch-positives Ergebnis sein. Durch den Vergleich mit einem Schwellwert werden die falsch-positiven Ergebnisse reduziert. Wenn der Wert des lokalen Extremums insbesondere größer als der Schwellwert ist, kann eine Betätigung des Fensters oder der Tür erfolgt sein. Das Ermitteln kann auch ein Klassifizieren der Betätigung beinhalten. Beispielsweise kann anhand der Summe der absoluten zweiten Änderungsraten und/oder anhand der entsprechenden Druckwerte bestimmt werden, ob das Fenster oder die Tür geöffnet oder geschlossen wird. Es ist möglich, neben den Summen der Änderungsraten weitere, von den Druckwerten abgeleitete, statistische Kennzahlen mit einem Schwellwert zu vergleichen, um die Zuverlässigkeit des Verfahrens zu verbessern.

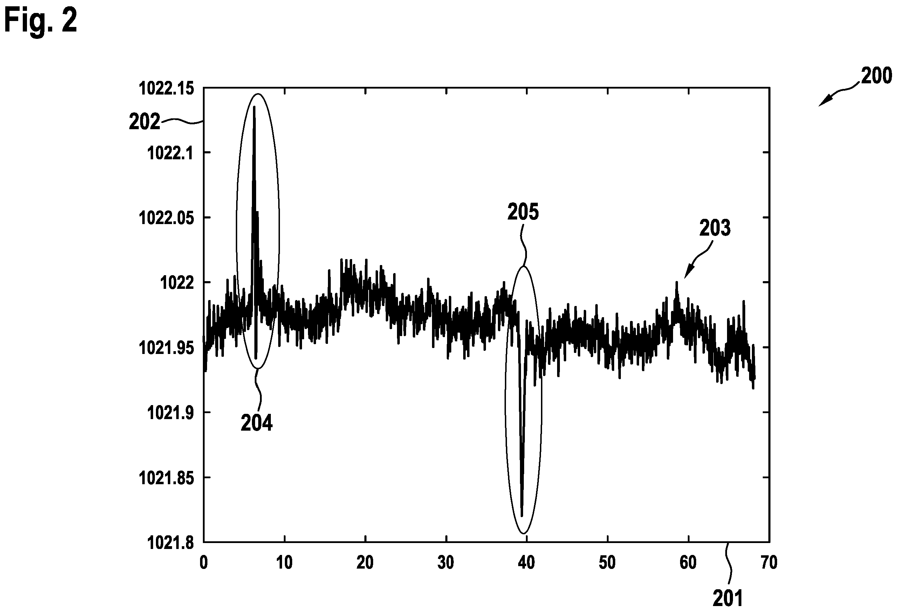

Figur 2 zeigt in schematischer Form ein Diagramm eines Verlaufs von Druckwerten gemäß einer Ausführungsform der vorliegenden Erfindung.

In Figur 2 wird ein Diagramm 200 eines Verlaufs von Druckwerten 203 dargestellt. Ein solcher Verlauf kann beispielsweise aus den detektierten Druckwerten gemäß Schritt S1 der Figur 1 entstehen. Auf der X-Achse 201 ist die Zeit in Sekunden und auf der Y-Achse 202 der Druck in Hektopascal dargestellt. Es gibt zwei Ausschläge 204, 205 die auf ein Betätigungsereignis schließen lassen können. Dabei ist zuerst ein lokales Maximum 204 und zeitlich später ein lokales Minimum 205 erkennbar. Dies kann beispielsweise auf ein Öffnen gefolgt von einem Schließen einer Tür oder eines Fensters hindeuten.

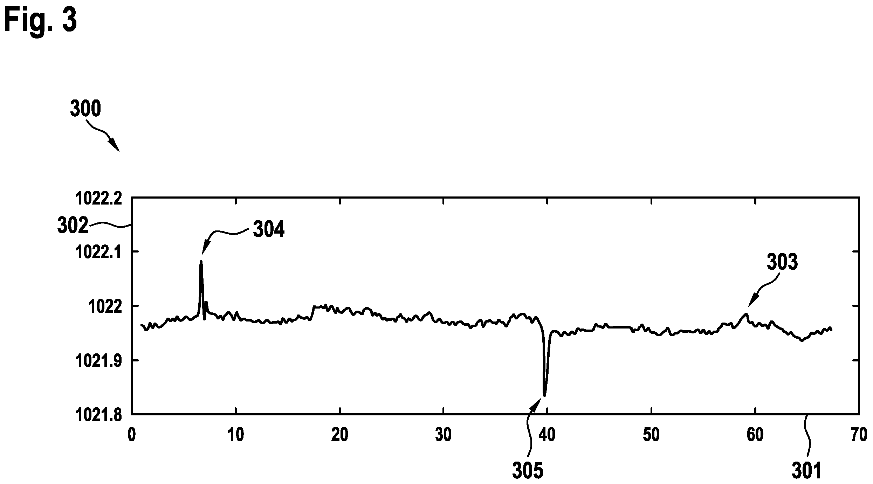

Figur 3 zeigt in schematischer Form ein Diagramm eines Verlaufs von gefilterten Druckwerten gemäß einer Ausführungsform der vorliegenden Erfindung.

In Figur 3 ist ein Diagramm 300 eines Verlaufs von gefilterten Druckwerten 303 dargestellt. Der Verlauf kann beispielsweise durch ein Glätten des Verlaufs der Druckwerte 203 gemäß Figur 2 mittels eines kantenerhaltenden Filters erhalten werden. Die X-Achse zeigt die Zeit in Sekunden und die Y-Achse den Druck in Hektopascal. Es sind zwei Ausschläge 304 und 305 erkennbar, die auf ein mögliches Betätigungsereignis schließen lassen.

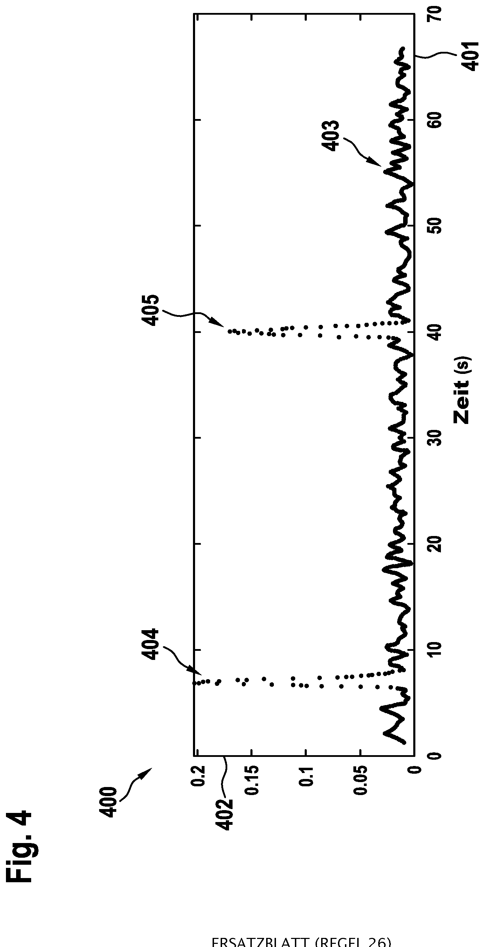

Figur 4 zeigt in schematischer Form ein Diagramm eines Verlaufs einer Summe von absoluten Änderungsraten von Druckwerten gemäß einer Ausführungsform der vorliegenden Erfindung.

In Figur 4 ist ein Diagramm 400 eines Verlaufs einer Summe von absoluten Änderungsraten von Druckwerten 403 gezeigt. Ein solcher Verlauf kann beispielsweise aus der Summe der absoluten Änderungsraten erster Ordnung gemäß Schritt S2 der Figur 1 berechnet werden. Auf der X-Achse ist die Zeit Sekunden und auf der Y-Achse die dimensionslosen absoluten summierten Änderungsraten dargestellt. Zu sehen sind zwei Ausschläge 404, 405, die auf eine mögliche Betätigung hinweisen. Durch die Verwendung eines gefilterten Druckverlaufs gemäß Figur 3 kann die Summe der Änderungsrate erster Ordnung der Druckwerte geringer sein als bei ungefilterten Druckverläufen und die Extremwerte können deutlicher erkennbar sein.

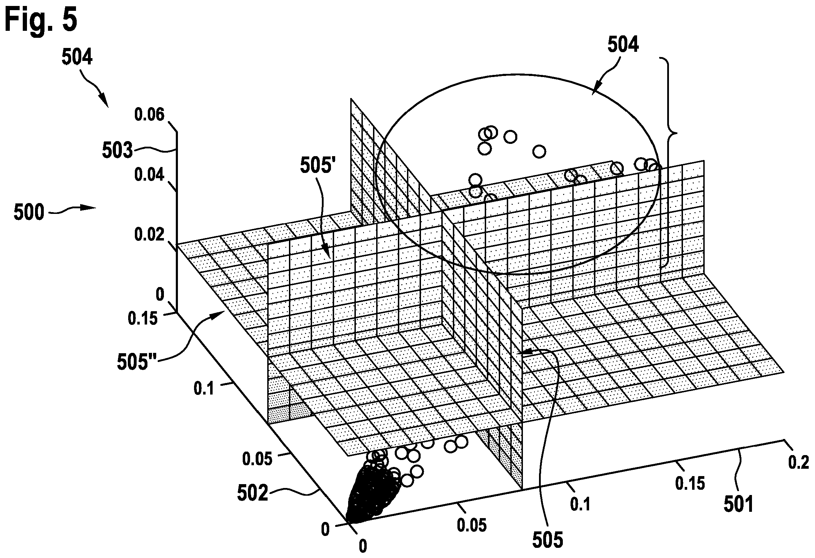

Figur 5 zeigt in schematischer Form ein Diagramm mit Schwellwertvergleichen gemäß einer Ausführungsform der vorliegenden Erfindung.

In Figur 5 ist ein Diagramm 500 mit einem Vergleich von statistischen Kennzahlen mit Schwellwerten gezeigt. Ein solches Diagramm kann beispielsweise aus dem Vergleich der ermittelten lokalen Extrema mit einem Schwellwert gemäß Schritt S5 der Figur 1 entstehen. Auf der X-Achse 501 ist die dimensionslose Summe der absoluten Änderungsraten erster Ordnung der Druckwerte, auf der Y-Achse 502 das dimensionslose Spitze-zu-Tal-Verhältnis der Druckwerte und auf der Z-Achse 503 die Standardabweichung der Druckwerte gezeigt. Die Schwellwerte für die Summe der absoluten Änderungsraten erster Ordnung 505, für Spitze-zu-Tal-Verhältnis 501' und für die Standardabweichung 505" sind als Ebenen im Diagramm 500 dargestellt. Einige der identifizierten lokalen Extrema 504 liegen über allen drei Schwellwerten. Somit entsprechen diese lokalen Extrema 504 Betätigungen eines Fensters oder einer Tür.

Um ein lokales Extremum als Betätigung zu klassifizieren, kann gefordert werden, dass alle verwendeten statistischen Kennzahlen über entsprechenden Schwellwerten liegen, oder dass zumindest eine Teilmenge der statistischen Kennzahlen über den entsprechenden Schwellwerten liegt. Die Schwellwerte können beispielsweise anhand von historischen Daten und/oder mittels Maschinenlernen festgelegt werden. Es ist ebenfalls möglich, dass ein Schwellwert einer statistischen Kennzahl von anderen statistischen Kennzahlen abhängig ist. In diesem Fall wären die Ebenen 505, 505' und 505" nicht senkrecht zu den Achsen, sondern gekippt oder gekrümmt.

Die Anzahl und die Art der verwendeten statistischen Kennzahlen zur Ermittlung der Betätigungen des Fensters oder Tür kann dabei von den statistischen Kennzahlen gemäß Figur 5 abweichen. So können beispielsweise ein bis fünf statistische Kennzahlen zur Ermittlung von Betätigungen herangezogen werden. Mögliche statistische Kennzahlen sind neben den in Figur 5 gezeigten statistischen Kennzahlen die Summe der absoluten Änderungsraten zweiter Ordnung oder die Anzahl der Übergänge über den Mittelwert.

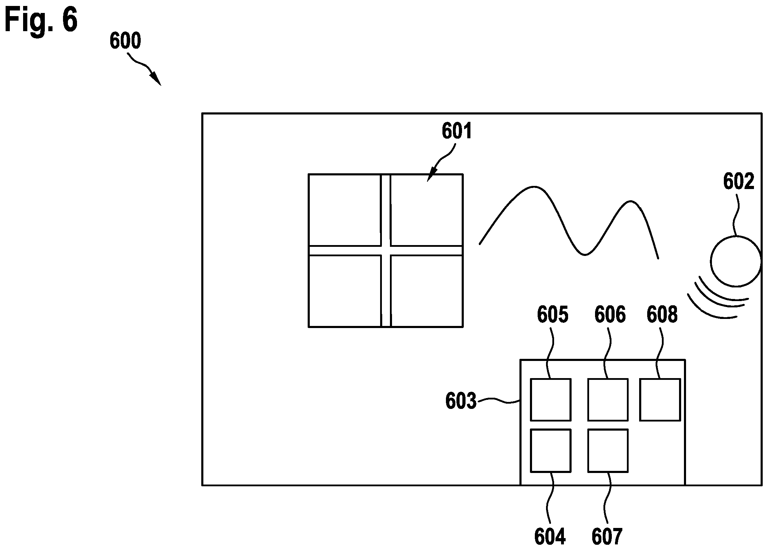

Figur 6 zeigt in schematischer Form einen Raum mit einer Ermittlungsvorrichtung gemäß einer Ausführungsform der vorliegenden Erfindung.

Figur 6 zeigt einen Raum 600 mit einem Fenster 601 einem Drucksensor 602 und einer Ermittlungsvorrichtung 603. Die Ermittlungsvorrichtung 603 ist ausgebildet, eine Betätigung des Fensters 601 in dem Raum 600 mittels des in dem Raum angeordneten Drucksensors 602 zu ermitteln. Die Ermittlungsvorrichtung 603 umfasst eine Detektionseinrichtung 604, die zum Detektieren von Druckwerten anhand des Drucksensors 602 zu mehreren Zeitpunkten ausgebildet ist, entsprechend Schritt S1 gemäß Figur 1. Weiter umfasst die die Ermittlungsvorrichtung 603 eine Bestimmungseinrichtung 605, die zum Bestimmen der Summe der absoluten Änderungsraten erster Ordnung und Bestimmen der Summe der absoluten Änderungsraten zweiter Ordnung der zeitlich letzten Druckwerte zu den mehreren Zeitpunkten ausgebildet ist, entsprechend Schritt S2 gemäß Figur 1. Des Weiteren umfasst die Ermittlungsvorrichtung 603 eine zweite Bestimmungseinrichtung 606, die zum Bestimmen der globalen maximalen und minimalen Werte der Summen der Änderungsraten innerhalb eines Zeitfensters ausgebildet ist, entsprechend Schritt S3 gemäß Figur 1. Im Übrigen umfasst die Ermittlungsvorrichtung 603 eine Identifizierungseinrichtung 607, die zum Identifizieren eines lokalen Extremums der Summen der absoluten Änderungsraten erster Ordnung und/oder der Summen der absoluten Änderungsraten zweiter Ordnung basierend auf den globalen maximalen und minimalen Werten der Summen innerhalb des Zeitfensters ausgebildet ist, entsprechend Schritt S4 gemäß Figur 1, sowie eine Ermittlungseinrichtung 608, die zum Ermitteln eines Betätigungsereignisses der Tür und/oder des Fensters anhand eines Vergleichs des ermittelten lokalen Extremums mit einem Schwellwert ausgebildet ist, entsprechend Schritt S5 gemäß Figur 1.

Wenn das Fenster 601 oder eine Tür (nicht gezeigt) geöffnet oder geschlossen wird, entsteht eine Druckschwankung in dem Raum 600, der von dem Drucksensor 602 detektiert werden kann. Der Drucksensor 602 stellt Daten über den Druck der Ermittlungsvorrichtung 603 bereit, die ermittelt, ob die Druckschwankung durch eine Betätigung des Fensters 601 hervorgerufen wurde. Es ist möglich, dass der Drucksensor 602 und die Ermittlungsvorrichtung 601 eine Einheit bilden.

Der Drucksensor 602 ist insbesondere an einer festen Stelle im Raum 600 angeordnet.

Es ist ebenfalls möglich, dass mehrere Fenster 601 oder Türen in dem Raum 600 oder in mehreren Räumen 600 angeordnet sind, von denen eine Betätigung ermittelbar ist.

Zusammenfassend weist zumindest eine Ausführungsform der vorliegenden Erfindung zumindest eines der folgenden Merkmale auf und/oder stellt zumindest einen der folgenden Vorteile bereit:
- zuverlässiges Detektieren von Betätigungen einer Tür oder eines Fensters
- Energieeffizienter Betrieb
- Überwachen mehrerer Fenster/Türen mit einem Drucksensor

Obwohl die vorliegende Erfindung anhand bevorzugter Ausführungsbeispiele beschrieben wurde, ist sie nicht darauf beschränkt, sondern auf vielfältige Weise im Rahmen der Ansprüche modifizierbar.

## Patentansprüche

1. Verfahren zum Ermitteln einer Betätigung einer Tür oder eines Fensters (601) in einem oder mehreren Räumen (600) mittels eines in einem der Räume (600) angeordneten Drucksensors (602) umfassend die Schritte:
- Detektieren (S1) von Druckwerten (203) anhand des Drucksensors (602) zu mehreren Zeitpunkten;
**gekennzeichnet durch**:
- Bestimmen (S2) der Summe der absoluten Änderungsraten erster Ordnung (403) und Bestimmen der Summe der absoluten Änderungsraten zweiter Ordnung der zeitlich letzten Druckwerte (203) zu den mehreren Zeitpunkten;
- Bestimmen (S3) der globalen maximalen und minimalen Werte der Summen der Änderungsraten innerhalb eines Zeitfensters;
- Identifizieren (S4) eines lokalen Extremums (404, 405) der Summen der absoluten Änderungsraten erster Ordnung (403) und/oder der Summen der absoluten Änderungsraten zweiter Ordnung basierend auf den globalen maximalen und minimalen Werten der Summen innerhalb des Zeitfensters;
- Ermitteln (S5) einer Betätigung der Tür und/oder des Fensters (601) anhand eines Vergleichs des ermittelten lokalen Extremums (404, 405) mit einem Schwellwert (505, 505', 505").

2. Verfahren gemäß Anspruch 1, wobei die detektierten Druckwerte (203) durch einen kantenerhaltenden Filter, bevorzugt durch einen bilateralen Filter, gefiltert werden.

3. Verfahren gemäß einem der Ansprüche 1-2, wobei das Detektieren (S1) einer Betätigung für einen Zeitraum von 5 Sekunden, vorzugsweise 3 Sekunden, ausgesetzt wird, wenn eine Betätigung ermittelt wird.

4. Verfahren gemäß einem der Ansprüche 1-3, wobei das Ermitteln (S5) einer Betätigung auf zusätzlichen statistischen Kennzahlen, insbesondere einer Standardabweichung der detektierten Druckwerte (203), auf einer Anzahl an Mittelwertüberschreitungen und/oder auf einem Verhältnis eines maximalen und minimalen Druckwerts, basiert.

5. Verfahren gemäß einem der Ansprüche 1-4, wobei zum Ermitteln (S5) einer Betätigung eine Topologie eines oder mehrerer Räume (600) miteinbezogen wird.

6. Verfahren gemäß einem der Ansprüche 1-5, wobei der Schwellwert (505, 505', 505") anhand von historischen Daten und/oder Maschinenlernen festgelegt wird.

7. Verfahren gemäß einem der Ansprüche 1-6, wobei zwischen 1 und 100, insbesondere zwischen 10 und 50 und vorzugsweise zwischen 20 und 30 Druckwerte (203) pro Sekunde gemessen werden.

8. Verfahren gemäß einem der Ansprüche 1-7, wobei das Ermitteln (S5) der Betätigung ein Bestimmen der Entfernung zwischen dem Drucksensor (602) und dem Fenster (601) oder der Tür, das Bestimmen einer Geschwindigkeit des Fensters (601) oder der Tür und/oder das Bestimmen einer Schließrichtung des Fensters (601) oder der Tür umfasst.

9. Ermittlungsvorrichtung, die ausgebildet ist, eine Betätigung einer Tür oder eines Fensters (601) in einem oder mehreren Räumen (600) mittels eines in einem der Räume (600) angeordneten Drucksensors (602) zu ermitteln, umfassend:
- eine Detektionseinrichtung, ausgebildet zum Detektieren von Druckwerten (203) anhand des Drucksensors (602) zu mehreren Zeitpunkten;
**gekennzeichnet durch**:
- eine erste Bestimmungseinrichtung, ausgebildet zum Bestimmen der Summe der absoluten Änderungsraten erster Ordnung (403) und Bestimmen der Summe der absoluten Änderungsraten zweiter Ordnung der zeitlich letzten Druckwerte (203) zu den mehreren Zeitpunkten;
- eine zweite Bestimmungseinrichtung, ausgebildet zum Bestimmen der globalen maximalen und minimalen Werte der Summen der Änderungsraten innerhalb eines Zeitfensters;
- eine Identifizierungseinrichtung, ausgebildet zum Identifizieren eines lokalen Extremums (404, 405) der Summen der absoluten Änderungsraten erster Ordnung (403) und/oder der Summen der absoluten Änderungsraten zweiter Ordnung basierend auf den globalen maximalen und minimalen Werten der Summen innerhalb des Zeitfensters;
- eine Ermittlungseinrichtung, ausgebildet zum Ermitteln eines Betätigungsereignisses der Tür und/oder des Fensters (601) anhand eines Vergleichs des ermittelten lokalen Extremums (404, 405) mit einem Schwellwert (505, 505', 505").

## Claims

1. Method for determining operation of a door or window (601) in one or more rooms (600) by means of a pressure sensor (602) arranged in one of the rooms (600), comprising the steps of:
- detecting (S1) pressure values (203) on the basis of the pressure sensor (602) at multiple times;
**characterized by**:
- ascertaining (S2) the sum of the absolute first-order rates of change (403) and ascertaining the sum of the absolute second-order rates of change of the chronologically last pressure values (203) at the multiple times;
- ascertaining (S3) the global maximum and minimum values of the sums of the rates of change within a time window;
- identifying (S4) a local extremum (404, 405) of the sums of the absolute first-order rates of change (403) and/or the sums of the absolute second-order rates of change on the basis of the global maximum and minimum values of the sums within the time window;
- determining (S5) operation of the door and/or window (601) on the basis of a comparison of the determined local extremum (404, 405) with a threshold value (505, 505', 505").

2. Method according to Claim 1, wherein the detected pressure values (203) are filtered by an edge-preserving filter, preferably by a bilateral filter.

3. Method according to either of Claims 1-2, wherein the detection (S1) of operation is suspended for a period of 5 seconds, preferably 3 seconds, when operation is determined.

4. Method according to one of Claims 1-3, wherein the determination (S5) of operation is based on additional statistical indicators, in particular a standard deviation of the detected pressure values (203), on a number of times a mean value is exceeded and/or on a ratio of a maximum and a minimum pressure value.

5. Method according to one of Claims 1-4, wherein a topology of one or more rooms (600) is taken into account for determining (S5) operation.

6. Method according to one of Claims 1-5, wherein the threshold value (505, 505', 505") is defined on the basis of historical data and/or machine learning.

7. Method according to one of Claims 1-6, wherein between 1 and 100, in particular between 10 and 50 and preferably between 20 and 30, pressure values (203) per second are measured.

8. Method according to one of Claims 1-7, wherein the determination (S5) of operation comprises ascertaining the distance between the pressure sensor (602) and the window (601) or door, ascertaining a speed of the window (601) or door and/or ascertaining a direction of closure of the window (601) or door.

9. Determination apparatus designed to determine operation of a door or window (601) in one or more rooms (600) by means of a pressure sensor (602) arranged in one of the rooms (600), comprising:
- a detection device designed to detect pressure values (203) on the basis of the pressure sensor (602) at multiple times;
**characterized by**:
- a first ascertainment device designed to ascertain the sum of the absolute first-order rates of change (403) and to ascertain the sum of the absolute second-order rates of change of the chronologically last pressure values (203) at the multiple times;
- a second ascertainment device designed to ascertain the global maximum and minimum values of the sums of the rates of change within a time window;
- an identification device designed to identify a local extremum (404, 405) of the sums of the absolute first-order rates of change (403) and/or the sums of the absolute second-order rates of change on the basis of the global maximum and minimum values of the sums within the time window;
- a determination device designed to determine an operation event for the door and/or window (601) on the basis of a comparison of the determined local extremum (404, 405) with a threshold value (505, 505', 505").

## Revendications

1. Procédé permettant de déterminer l'actionnement d'une porte ou d'une fenêtre (601) dans une ou plusieurs pièces (600) au moyen d'un capteur de pression (602) qui est disposé dans l'une des pièces (600), comprenant les étapes suivantes :
- la détection (S1) de valeurs de pression (203) à l'aide du capteur de pression (602) à de multiples instants ;
**caractérisé par** :
- la détermination (S2) de la somme des taux de variation absolus de premier ordre (403) et la détermination de la somme des taux de variation absolus de second ordre des dernières valeurs de pression chronologiquement (203) aux multiples instants ;
- la détermination (S3) des valeurs maximales et minimales globales des sommes des taux de variation à l'intérieur d'une fenêtre temporelle ;
- l'identification (S4) d'un extremum local (404, 405) des sommes des taux de variation absolus de premier ordre (403) et/ou des sommes des taux de variation absolus de second ordre sur la base des valeurs maximales et minimales globales des sommes à l'intérieur de la fenêtre temporelle ;
- la détermination (S5) d'un actionnement de la porte et/ou de la fenêtre (601) à l'aide d'une comparaison entre l'extremum local déterminé (404, 405) et une valeur de seuil (505, 505', 505").

2. Procédé selon la revendication 1, **caractérisé en ce que** les valeurs de pression détectées (203) sont filtrées par un filtre préservant les bords, de préférence par un filtre bilatéral.

3. Procédé selon l'une des revendications 1-2, dans lequel le détecteur (S1) est soumis à un actionnement pendant une période de 5 secondes, de préférence de 3 secondes, lorsqu'un actionnement est déterminé.

4. Procédé selon l'une des revendications 1-3, dans lequel la détermination (S5) d'un actionnement est basée sur des grandeurs caractéristiques statistiques supplémentaires, en particulier sur la base d'un écart-type des valeurs de pression détectées (203), sur un nombre de dépassements de valeur moyenne et/ou sur un rapport entre une valeur de pression maximale et une valeur de pression minimale.

5. Procédé selon l'une des revendications 1-4, dans lequel une topologie d'une ou plusieurs pièces (600) est prise en compte pour la détermination (S5) d'un actionnement.

6. Procédé selon l'une des revendications 1-5, dans lequel la valeur de seuil (505, 505', 505") est définie à l'aide de données historiques et/ou d'un apprentissage automatique.

7. Procédé selon l'une des revendications 1-6, **caractérisé en ce que** de 1 à 100, en particulier de 10 à 50 et de préférence de 20 à 30 valeurs de pression (203) sont mesurées par seconde.

8. Procédé selon l'une des revendications 1 à 7, dans lequel la détermination (S5) de l'actionnement comprend la détermination de la distance entre le capteur de pression (602) et la fenêtre (601) ou la porte, la détermination d'une vitesse de la fenêtre (601) ou de la porte et/ou la détermination d'une direction de fermeture de la fenêtre (601) ou de la porte.

9. Dispositif de détermination, configuré pour déterminer l'actionnement d'une porte ou d'une fenêtre (601) dans une ou plusieurs pièces (600) au moyen d'un capteur de pression (602) disposé dans l'une des pièces (600), comprenant :
- un dispositif de détection, configuré pour détecter des valeurs de pression (203) à l'aide du capteur de pression (602) à de multiples instants ;
**caractérisé par** :
- un premier dispositif de détermination, configuré pour déterminer la somme des taux de variation absolus de premier ordre (403) et pour déterminer la somme des taux de variation absolus de second ordre des dernières valeurs de pression chronologiquement (203) aux multiples instants ;
- un second dispositif de détermination, configuré pour déterminer les valeurs maximales et minimales globales des sommes des taux de variation à l'intérieur d'une fenêtre temporelle ;
- un dispositif d'identification, configuré pour identifier un extremum local (404, 405) des sommes des taux de variation absolus de premier ordre (403) et/ou des sommes des taux de variation absolus de second ordre sur la base des valeurs maximales et minimales globales des sommes à l'intérieur de la fenêtre temporelle ;
- un dispositif de détermination, configuré pour déterminer un événement d'actionnement de la porte et/ou de la fenêtre (601) à l'aide d'une comparaison entre l'extremum local déterminé (404, 405) et une valeur de seuil (505, 505', 505").
